# EUROPEAN PATENT APPLICATION

(11) **EP 4 729 244 A1**
(43) Date of publication of application: **22.04.2026**
(21) Application number: 24825546.5
(22) Date of filing: 05.04.2024
(51) Int. Cl.: B25J 5/00, B25J 13/00

(54) **WORK ROBOT, CONTROL METHOD FOR WORK ROBOT, CONTROL PROGRAM FOR WORK ROBOT, AND WORK SYSTEM**

(30) Priority: 19.06.2023 JP 2023100361
(71) Applicant: DENSO CORPORATION, Kariya-city, Aichi 448-8661 (JP)
(72) Inventor: KATO, Akira, Kariya-city, Aichi 448-8661 (JP); TAKAHASHI, Yukihiro, Kariya-city, Aichi 448-8661 (JP); OHYAMA, Kohji, Kariya-city, Aichi 448-8661 (JP); TSUCHIYA, Yuji, Kariya-city, Aichi 448-8661 (JP); MORI, Toshifumi, Kariya-city, Aichi 448-8661 (JP); BABA, Hiroyasu, Kariya-city, Aichi 448-8661 (JP); YOSHIOKA, Yuki, Kariya-city, Aichi 448-8661 (JP); OKAMOTO, Akira, Kariya-city, Aichi 448-8661 (JP); AKIYAMA, Kohei, Kariya-city, Aichi 448-8661 (JP); NAKAMURA, Satoshi, Kariya-city, Aichi 448-8661 (JP); MATSUNAGA, Yasuaki, Kariya-city, Aichi 448-8661 (JP)
(74) Representative: Kuhnen & Wacker Patent- und Rechtsanwaltsbüro PartG mbB
(86) International application number: PCT/JP2024/014142
(87) International publication number: WO 2024/262136

(57) **Abstract**

A work robot (30) includes at least one arm (31) configured to perform an instructed operation on an article, a mobile unit (32) configured to move on a floor surface, and a control unit (36) configured to control the at least one arm and the mobile unit so as to autonomously perform a task on the article in cooperation with another work robot, based on state information representing at least one of a state of the other work robot and a state of the work robot itself.

## Description

### [Cross Reference to Related Application]

This application is based on and claims the benefit of priority from Japanese Patent Application No. 2023-100361 filed June 19, 2023, the contents of each of which are incorporated herein by reference.

### [Technical Field]

The present disclosure relates to a work robot, a control method for the work robot, a control program for the work robot, and a work system.

### [Background Art]

For example, PTL 1 discloses a work system in which at least one mobile robot, which moves with a single-arm or dual-arm work robot mounted on a mobile carriage, is moved between work locations along a predefined route to perform work at a plurality of work locations. Each mobile robot is provided with a power-reception device, and at least one of the plurality of work locations is provided with a power-supply facility that, by the operation of the mobile robot, attaches and detaches a corresponding power-supply device to and from the power-reception device of the mobile robot. The work robot is equipped with a battery that supplies power during movement between the work locations.

### [Citation List]

### [Patent Literature]

[PTL 1] JP 2015-211997 A

### [Summary of the Invention]

When a specific task is performed using a work robot, it is necessary to construct, at the work location, a work environment required for the work robot to perform the task, such as a workbench on which the work robot operates, or conveying equipment that transports parts of the product handled by the work robot to the workbench. Such a work environment is constructed each time by an operator based on the task content assigned to the work robot. Therefore, through the inventors' detailed study, it has been found that, in order to accommodate production of small-lot, high-mix products, the operator must change the work environment within a short period, and therefore a certain number of operators must be constantly secured. This likely leads to an increase in labor costs, which raises an issue.

The inventors have also found that, for example, when identical products are to be produced during the same period at a plurality of work sites distributed around the world, it is difficult for operators at each work site to rapidly construct the work environment for the work robots.

It is an objective of the present disclosure to provide a work robot, a control method for the work robot, a control program for the work robot, and a work system, which enable production of a product using the work robot without requiring a person to construct a work environment in advance in accordance with the task content for the work robot.

One aspect of the present disclosure provides a work robot including: at least one arm configured to perform an instructed operation on an article; a mobile unit configured to move on a floor surface; and a control unit configured to control the at least one arm and the mobile unit so as to autonomously perform a task on the article in cooperation with another work robot, based on state information representing at least one of a state of the other work robot and a state of the work robot itself.

One aspect of the present disclosure provides a control method for a work robot including at least one arm configured to perform an instructed operation on an article, and a mobile unit configured to move on a floor surface. The control method includes causing a computer to perform a process of controlling the at least one arm and the mobile unit to autonomously perform the task on the article in cooperation with another work robot based on state information representing at least one of a state of the other work robot and a state of the work robot itself.

One aspect of the present disclosure provides a control program for a work robot including at least one arm configured to perform an instructed operation on an article and a mobile unit configured to move on a floor surface, the control program causing a computer to perform a process of controlling the at least one arm and the mobile unit to autonomously perform the task on the article in cooperation with another work robot based on state information representing at least one of a state of the other work robot and a state of the work robot itself.

One aspect of the present disclosure provides a work system including: a plurality of work robots, each work robot including at least one arm configured to perform an instructed operation on an article, a mobile unit configured to move on a floor surface, and a control unit configured to control the at least one arm and the mobile unit so as to autonomously perform a task on the article in cooperation with another work robot based on state information representing at least one of a state of the other work robot and a state of the work robot itself; and a server including a communication unit configured to perform data communication with the respective work robots and to transmit information relating to production of the article to the work robots.

According to the present disclosure, it is possible to produce products by using work robots without requiring a person to construct a work environment in advance in accordance with the work content for the work robots.

### [Brief Description of the Drawings]

The above and other objects, features and advantages of the present disclosure will become more apparent from the following detailed description with reference to the accompanying drawings. The drawings are:
FIG. 1 is a schematic diagram illustrating an example configuration of a work system;
FIG. 2 is a functional block diagram of a work robot;
FIG. 3 is a schematic diagram illustrating an example of the work robot;
FIG. 4 is a flowchart illustrating an example of a control process in the work robot;
FIG. 5 is an illustration of an example in which the work robot is fixed to a floor surface using columnar supports;
FIG. 6 is a schematic diagram illustrating an example of the work robot equipped with tools on a mobile unit;
FIG. 7 is a schematic diagram illustrating an example of the work robot that assembles parts in cooperation with another work robot;
FIG. 8 is a schematic diagram illustrating an example of work robots equipped with coupling sections;
FIG. 9 is a schematic diagram illustrating an example of work robots coupled together;
FIG. 10 is a schematic diagram illustrating an example in which a plurality of work robots are coupled to form a production line; and
FIG. 11 is a schematic diagram illustrating an example in which a work robot located at the final stage of the production line functions as an AMR.

### [Description of the Embodiments]

Hereinafter, the same reference numerals are assigned to identical components and identical processes throughout all the drawings, and redundant descriptions will be omitted. The dimensional ratios of objects depicted in the drawings may be exaggerated for purposes of explanation and may differ from the actual dimensional ratios.

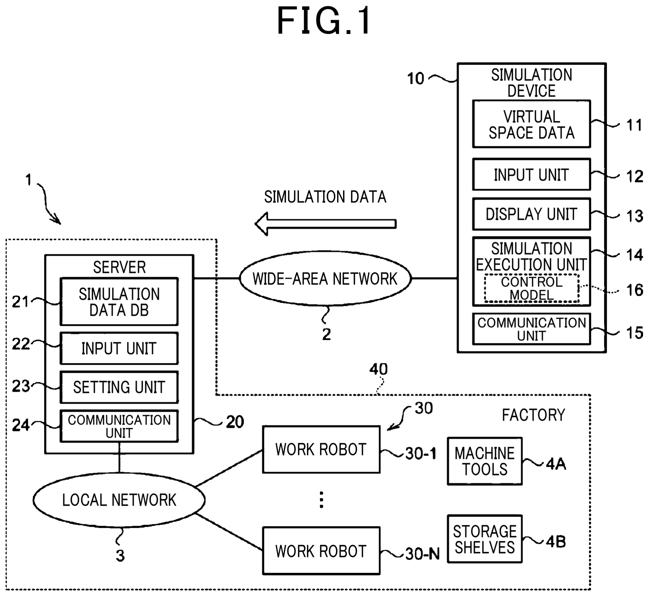

FIG. 1 is a diagram illustrating an example of the configuration of a work system 1 that produces products using work robots 30. There are no restrictions on the types of products produced by the work system 1, and any products may be produced by the work robots 30. Specifically, the work system 1 may produce various products, including transportation equipment such as automobiles, electrical devices such as air conditioners, molds, food products, beverages, magazines, sporting goods, and wooden products. In the present embodiment, the work system 1 produces electrical devices as one example. The work system 1 is not limited to product manufacturing, and may also perform other tasks on articles, such as repair or disassembly.

The work system 1 includes a server 20 and a plurality of work robots 30. The server 20 and the work robots 30 are disposed in a factory 40, whereas a simulation device 10, which is an example of an external device, is located at a remote site away from the factory 40, such as headquarters. Therefore, the simulation device 10 and the server 20 are connected via a wide-area network 2, such as a Wide Area Network (WAN) or the Internet. Meanwhile, the server 20 and the work robots 30 are connected via a local network 3, such as a Local Area Network (LAN), local 5G, or local 6G.

The wide-area network 2 and the local network 3 may be wired or wireless. Since the work robots 30 move within the factory 40, as will be described later, the local network 3 may preferably be constructed wirelessly. The server 20 does not necessarily need to be located within the factory 40, and may instead be implemented, for example, using cloud computing provided on the wide-area network 2.

As illustrated in FIG. 1, the work system 1 includes N work robots 30, where N is an integer of two or greater. When distinguishing individual work robots 30, a number from 1 to N is appended after the reference numeral of a respective one of the work robots 30. When describing matters common to the plurality of work robots 30, the robots are simply referred to as the "work robots 30."

The factory 40 is provided with, for example, machine tools 4A for processing and producing parts used in products, and storage shelves 4B for parts purchased externally. The work robots 30 move to supplies of parts of the products, such as the machine tools 4A and the storage shelves 4B, and performs tasks such as assembling, processing, and transporting parts. The parts of the products in the present embodiment are merely an example of articles used in the products.

In the present embodiment, the work system 1 is described through an example in which the work robots 30 produce electrical devices inside the factory 40. However, the location where the work robots 30 perform tasks is not limited to the factory 40. The tasks may instead be performed in places not primarily intended for product manufacturing, such as laboratories or residences, and depending on the characteristics of the products being manufactured, the tasks may even be performed outdoors. Although only a single factory 40 is illustrated in FIG. 1, a plurality of factories 40 may be provided. In such a case, the server 20 of each factory 40 is connected to the wide-area network 2. The locations of the factories 40 are not limited, and the factories 40 may, for example, be distributed across various regions around the world.

Next, examples of functional configurations of the simulation device 10, the server 20, and the work robots 30 will be described.

The simulation device 10 is configured to simulate tasks performed on parts by a plurality of work robots 30 operating cooperatively within a virtual space that replicates the actual space where the work robots 30 operate, namely the interior of the factory 40.

As illustrated in FIG. 1, the simulation device 10 includes virtual space data 11, an input unit 12, a display unit 13, a simulation execution unit 14, and a communication unit 15.

The virtual space data 11 is data used to construct, in the simulation device 10, a virtual space that faithfully replicates the space inside the factory 40 where the work robots 30 performs tasks, that is, a "virtual factory." For example, the virtual space data 11 includes data such as the layout of the factory 40 in which the work robots 30 perform tasks, floor-level differences, the locations and shapes of installations provided in the factory 40, the locations and shapes of columns, and the locations and shapes of supplies of parts, such as the machine tools 4A and the storage shelves 4B.

The input unit 12 receives, from a user, the task content of each work robot 30 and constraint conditions under which the work robot 30 performs tasks. The constraint conditions include, for example, the range in which the work robot 30 is allowed to move and a threshold of the remaining battery level at which charging operations are to be initiated.

The display unit 13 displays, on a display, the execution process and results of simulation of tasks performed by the plurality of work robots 30 within the virtual factory.

The simulation execution unit 14 controls the work robots 30 present in the virtual factory so that each work robot 30 performs the task instructed by the user under the instructed constraint conditions, and simulates the operations of each work robot 30. The simulation execution unit 14 generates training data with state information of each work robot 30 acquired through the simulation as input and the control content at that time as output. The simulation execution unit 14 then generates a control model 16 corresponding to each work robot 30 through machine learning using the training data.

The state information represents at least one of the state of the subject work robot 30 and the state of another work robot 30. The work robot 30 acquires at least one of the state of the subject work robot 30 and the state of another work robot 30 through communication with the other work robot 30, through sensors 33 mounted to the subject work robot 30, and through information relating to the operation of the subject work robot 30, such as a movement direction and a movement speed. Also in the simulation performed by the simulation execution unit 14, the work robots 30 in the virtual factory acquire state information in the same manner as the actual work robots 30, and are controlled so as to take optimal actions in response to the acquired state information. Therefore, a plurality of pieces of training data are generated, each associating state information with control content that enables the work robot 30 to perform the instructed task in response to various state information. The simulation execution unit 14 performs machine learning of the control model 16, which outputs control content for each work robot 30 based on the state information, using the plurality of pieces of training data.

As the control model 16, a Convolutional Neural Network (CNN) or the like may be used as an example. As the machine learning method, deep learning or the like may be used as an example. However, the form of the control model 16 and the machine learning method are not limited. The simulation execution unit 14 may generate the control model 16 using a known model form such as You Only Look Once (YOLO) or a known machine learning method such as a support vector machine.

The communication unit 15 performs data communication with the server 20 via the wide-area network 2. Specifically, the communication unit 15 transmits to the server 20, which manages the actual factory 40 represented by the virtual factory, simulation data including: the control model 16 corresponding to each work robot 30, the model being generated by simulating operations of the work robots 30 in the simulation execution unit 14; and the virtual space data 11 used in the simulation.

The server 20 is configured to manage data relating to the factory 40, such as production plans for products and the operational status of the work robots 30, and performs production management of products using the work robots 30 based on the production plans.

As illustrated in FIG. 1, the server 20 includes a simulation data DB 21, an input unit 22, a setting unit 23, and a communication unit 24.

The simulation data DB 21 stores simulation data received from the simulation device 10. The term "DB" is an abbreviation for "database."

The input unit 22 receives various instructions from a user, such as an instruction to initiate production of products. The server 20 may also receive various instructions from the simulation device 10 via the wide-area network 2. In such a case, the server 20 does not need to include the input unit 22.

When an instruction to initiate production of products is received, the setting unit 23 associates, with the control model 16 included in the simulation data, designation information that uniquely specifies the work robot 30 that performs the task using the control model 16. Then, the setting unit 23 sets, for the work robot 30 specified by the designation information, the control model 16 associated with the designation information and the virtual space data 11. The setting of the control model 16 and the virtual space data 11 for the work robot 30 by the setting unit 23 is performed via the local network 3.

The setting unit 23 may set the control model 16 and the virtual space data 11 for each work robot 30 by unicast through the communication unit 24, or by multicast. A multicast packet includes the control models 16 and the virtual space data 11 for all of the work robots 30 included in the work system 1, and designation information is associated with each control model 16. When multicast is used, the time difference among the work robots 30 in receiving instructions from the server 20 can be reduced as compared with the case of using unicast. The designation information may include, for example, an identification number uniquely identifying the work robot 30 or a manufacturing number of the work robot 30. In the present embodiment, an identification number of the work robot 30 is used as the designation information as an example.

The communication unit 24 performs data communication with the server 20 via the wide-area network 2 and also performs data communication with each work robot 30 via the local network 3.

Each work robot 30 is a robot that autonomously performs tasks instructed for parts of a product, using the acquired state information and the control model 16, while cooperating with other work robots 30. The control model 16 outputs control content for the work robot 30 based on the state information, and the work robot 30 performs tasks in accordance with the control content output from the control model 16. Therefore, the control model 16 also serves as an example of instruction information that specifies the task content for the parts.

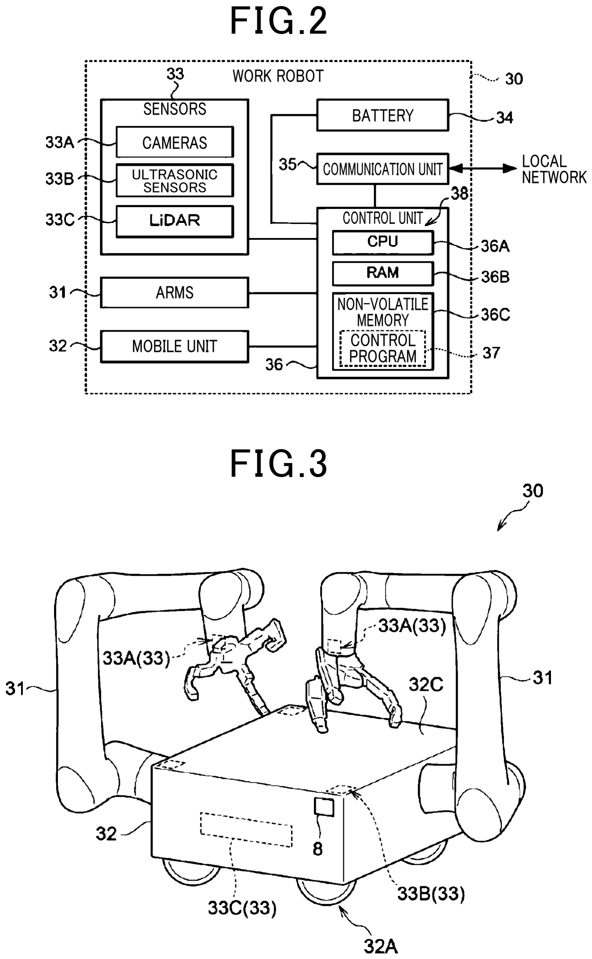

FIG. 2 is a diagram illustrating an example of a functional configuration of each work robot 30. The work robot 30 includes one or more arms 31, a mobile unit 32, sensors 33, a battery 34, a communication unit 35, and a control unit 36.

The one or more arms 31 are an example of a work unit that performs instructed operations on parts. Each work robot 30 includes at least one arm 31. At a joint portion of each arm 31, position control of the arm 31 is performed by moving a link attached to the joint portion in the instructed direction.

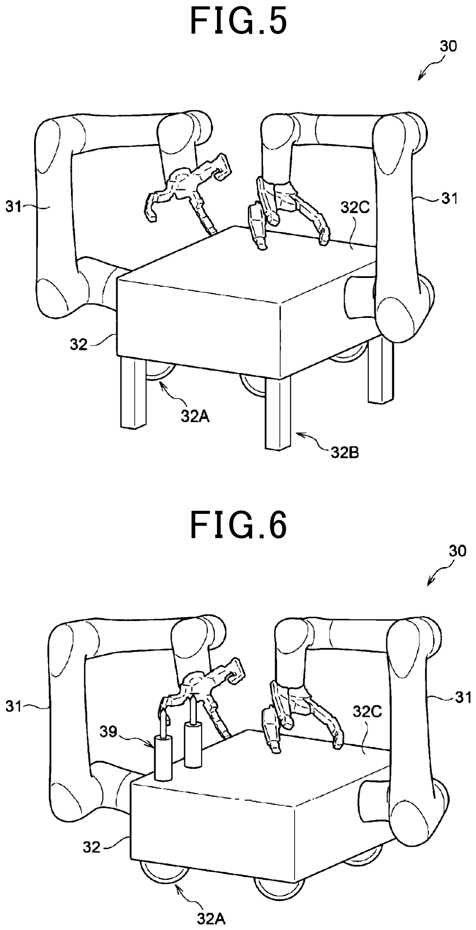

Each arm 31 is capable of performing operations such as gripping parts, moving parts, processing parts, and assembling parts together. At the distal end of the arm 31, an attachment portion capable of attaching and detaching various types of tools 39, as illustrated later in FIG. 6, is provided, where a tool 39 suitable for the task content is attached to the attachment portion under control of the control unit 36. For example, when gripping a part, a robot hand having a plurality of movable supports that mimic human fingers is attached to the attachment portion. Also, when fastening a part with screws, a screwdriver that rotates screws is attached to the attachment portion. In this way, at the attachment portion of the arm 31, the tool 39 is switched according to the task content. In some cases, a robot hand may be attached to the attachment portion of the arm 31 and, when fastening a part with screws, the robot hand may grasp a screwdriver to perform the fastening. Thus, a configuration in which the robot hand grasps different types of tools 39 is also included in the tool-switching operation.

The mobile unit 32 is a device that enables the work robot 30 to move over the floor surface of the factory 40. The mobile unit 32 enables movement of the work robot 30 by rotating bodies 32A, such as wheels or balls. However, the movement mechanism provided in the mobile unit 32 is not limited to the rotation of the rotating bodies 32A. For example, the mobile unit 32 may instead be provided with two or more legs in place of the rotating bodies 32A, and move by walking.

FIG. 3 is a diagram illustrating an example of a work robot 30 having the rotating bodies 32A attached at positions where the mobile unit 32 contacts the floor surface. In the work robot 30 illustrated in FIG. 3, the arms 31 are attached to the mobile unit 32. However, it goes without saying that the work robot 30 may include a torso (not shown), and that the arms 31 may be attached at positions other than the mobile unit 32, such as the torso.

The mobile unit 32 is provided with a work surface 32C that may be used, for example, as a workbench for disposing parts.

The sensors 33 of the work robot 30 in FIG. 2 acquire peripheral information representing surroundings of the work robot 30. The sensors 33 of the work robot 30 may include, for example, cameras 33A, ultrasonic sensors 33B, and Light Detection and Ranging (LiDAR) 33C.

Each camera 33A captures at least one of a visible image and an infrared image. The images captured by the camera 33A may be either moving images or still images. Because the camera 33A is mainly used to recognize the shape, type, and other attributes of parts gripped by the arm 31, the camera 33A is attached, for example, near the distal end of the arm 31 at a position where the gripped part falls within its field of view (see FIG. 3). The camera 33A may also be a stereo camera, which is an example of a ranging sensor that measures the distance to a subject and acquires positional relationships of surrounding objects as three-dimensional data.

Each ultrasonic sensor 33B measures the distance between the work robot 30 and another object around the work robot 30 by measuring the time from when an ultrasonic wave is transmitted until the ultrasonic wave reflected by the other object is received. That is, the ultrasonic sensor 33B is an example of a ranging sensor. Since the ultrasonic sensor 33B is mainly used for collision detection to determine whether the work robot 30 will collide with another object. Therefore, it is mounted on the surface of the work robot 30 where there is a possibility of collision with another object (see FIG 3). When the mobile unit 32 has a box-like shape such as a rectangle or cube, the ultrasonic sensors 33B may be mounted at the four corners of the work surface 32C of the mobile unit 32. Such mounting positions for the ultrasonic sensors 33B are merely examples. The ultrasonic sensors 33B may be mounted on side surfaces of the mobile unit 32, on the arms 31, or on both the mobile unit 32 and the arms 31.

The LiDAR 33C measures the distance between the work robot 30 and another object around the work robot 30, as well as the position and shape of the other object, by measuring the time from when laser light is emitted until reflected light from the other object is received. That is, the LiDAR 33C is an example of a ranging sensor.

The LiDAR 33C is mainly used for creating a map indicating what objects are located where inside the factory 40, and is therefore mounted at a position that allows visibility in the horizontal direction. The horizontal direction refers to a direction along the floor surface on which the work robot 30 moves. As one example, when the mobile unit 32 is box-shaped, the LiDAR 33C is attached to a side surface of the mobile unit 32 (see FIG. 3). Such a mounting position for the LiDAR 33C is merely a example, and the LiDAR 33C may instead be mounted on the arm 31, or on each of the mobile unit 32 and the arm 31.

The sensors 33 of the work robot 30 are not limited to any of the cameras 33A, the ultrasonic sensors 33B, and the LiDAR 33C. In addition to the cameras 33A, the ultrasonic sensors 33B, and the LiDAR 33C, the work robot 30 may further include other types of sensors 33 for acquiring peripheral information. The work robot 30 may additionally include, as needed, at least one type of sensor 33 such as a barcode reader, a gyro sensor, a Global Positioning System (GPS) sensor, or a pressure sensor. Furthermore, the work robot 30 does not need to include all of the cameras 33A, the ultrasonic sensors 33B, and the LiDAR 33C, and may include at least one of these types of sensors.

Peripheral images around the work robot 30 captured by the cameras 33A and the LiDAR 33C are examples of peripheral information representing the surroundings of the work robot 30.

The work robot 30 selects the sensors 33 to be used for acquiring peripheral information according to the characteristics of the sensors 33 and the characteristics of the object to be measured.

As illustrated in FIG. 3, the mobile unit 32 is provided with a marker 8 that includes information indicating, for example, its own identification number. A plurality of markers 8 may be attached to the mobile unit 32 so that at least one of the markers 8 can be recognized from any direction. The work robot 30 can identify another work robot 30 by capturing, for example, the image of the marker 8 of the other work robot 30 using the cameras 33A and reading the identification number.

For convenience of explanation, in FIGS. 5 to 11 described below, illustration and reference numerals for the sensors 33 and the markers 8 of the work robot 30 will be omitted.

The battery 34 supplies electric power to various parts of the work robot 30 in accordance with instructions from the control unit 36. The battery 34 is capable of receiving electric power not only through direct wired power reception from an external source but also through wireless power reception that receives power from an external source in a non-contact manner. When the remaining amount of the battery 34 falls below a predefined threshold, the work robot 30 moves, under control of the control unit 36, to a wireless power transmission device (not shown) located inside the factory 40 and autonomously charges the battery 34.

The communication unit 35 performs data communication with each of the other work robots 30 and with the server 20 via the local network 3. Specifically, in accordance with instructions from the control unit 36, the communication unit 35 transmits state information of its own work robot 30 to the other work robots 30 and receives state information of the other work robots 30. Sharing the state information among the plurality of work robots 30 enables acquisition of information that would be difficult to acquire using a single work robot 30 alone. The communication unit 35 also transmits peripheral information acquired through the sensors 33 and state information of the work robot 30 to the server 20, and receives from the server 20 the virtual space data 11, the control model 16 associated with the designation information, and various instructions. Therefore, although the work robot 30 autonomously performs tasks on parts, it is also possible for the work robot 30 to modify its operation based on instructions from the server 20.

The control unit 36 controls the arms 31 and the mobile unit 32 so as to autonomously perform the instructed task on parts, using the acquired state information and cooperating with the other work robots 30. To this end, the control unit 36 performs necessary control on the sensors 33, the battery 34, and the communication unit 35 so that the work robot 30 can perform the instructed task.

Specifically, the control unit 36 inputs the state information, which is updated sequentially, into the control model 16 and autonomously controls the work robot 30 in accordance with the control content output from the control model 16. That is, the control unit 36 autonomously controls the work robot 30 while sequentially determining, using the control model 16, the optimal control content for the latest state information.

Such a control unit 36 is configured using a computer 38 that includes a central processing unit (CPU) 36A, which is an example of a processor, a random access memory (RAM) 36B, and a non-volatile memory 36C.

The non-volatile memory 36C pre-stores various programs, including a control program 37 that is loaded by the CPU 36A to control the work robot 30, as well as various parameters referenced by the CPU 36A when controlling the work robot 30. The RAM 36B is used as a temporary work area for the CPU 36A.

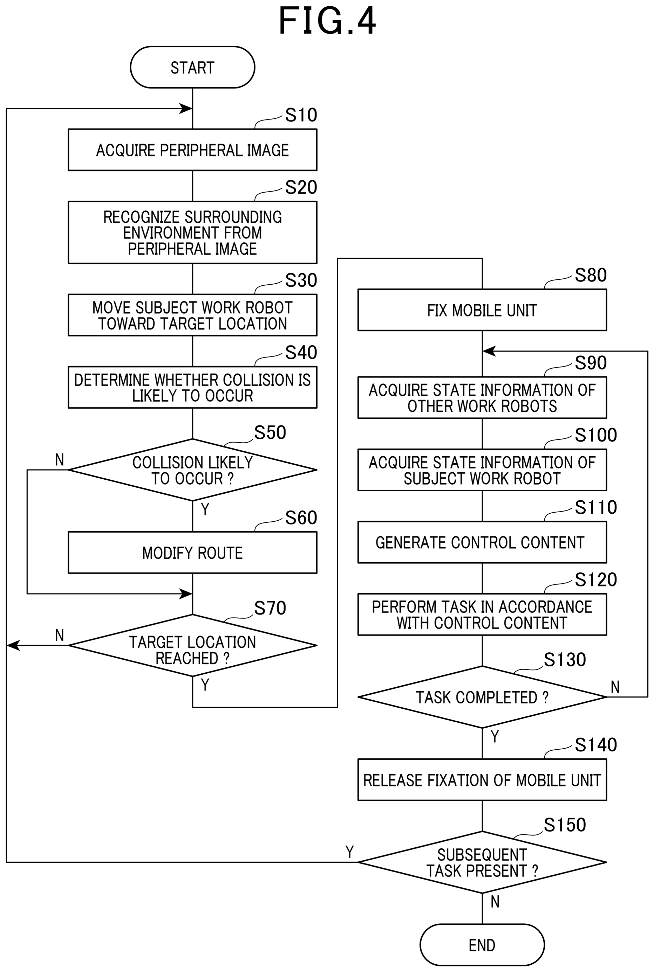

Next, the operations of the work robots 30 according to the present embodiment will be described. FIG. 4 is a flowchart illustrating an example of a control process performed by each work robot 30 when an instruction to initiate production of products is received from the server 20. The CPU 36A of the work robot 30 performs the control process by loading the control program 37 stored in the non-volatile memory 36C. Although each work robot 30 performs the control process upon receiving the instruction to initiate production of products, the same control process is performed by all of the work robots 30. Therefore, the description below focuses on the control process performed by any one of the work robots 30, which is hereinafter referred to as a subject work robot.

Before performing the process step S10 in FIG. 4, the CPU 36A performs an initial process of determining whether the designation information associated with the control model 16 received from the server 20 matches the identification number of the subject work robot 30. The CPU 36A performs the control process of the subject work robot 30 illustrated in FIG. 4 only when the designation information matches the identification number of the subject work robot 30, that is, only when the designation information designates the subject work robot 30. The non-volatile memory 36C of each work robot 30 stores the virtual space data 11 and the control model 16 associated with its own identification number.

First, at step S10, the CPU 36A controls the LiDAR 33C to acquire a peripheral image of the subject work robot 30. The CPU 36A may alternatively control the camera 33A to acquire a peripheral image of the subject work robot 30.

At step S20, the CPU 36A applies a known image analysis technique to the peripheral image acquired at step S10 and recognizes the surrounding environment to identify what objects are located in which directions. Shape data for objects in the factory 40, such as the machine tools 4A, the storage shelves 4B, and the work robots 30, are included in advance in the virtual space data 11. Therefore, comparing the shapes of objects included in the peripheral image with the shape data of the objects enables the CPU 36A to identify the types, positions, and orientations of objects within the coverage of the laser light emitted from the LiDAR 33C, thereby enabling creation of a map of the interior of the factory 40.

At step S30, the CPU 36A controls the mobile unit 32 in accordance with the control content acquired by inputting the state information into the control model 16, while referring to the map created at step S20, and moves the subject work robot 30 toward a target location set by the simulation. In the present embodiment, an example is described in which the target location is set to one of the machine tools 4A and multiple work robots 30 cooperate to perform tasks such as assembling, processing, and transporting parts produced by the machine tool 4A. However, the target location may instead be any of the storage shelves 4B or another location. Setting the target location to the machine tool 4A means setting a location such that the parts produced by the machine tool 4A fall within the reachable range of the arm 31.

The target location is an example of location information received from the server 20 together with the control model 16 and the virtual space data 11, and is included in the simulation data.

The state information input to the control model 16 includes, for example, information representing the operation and internal state of the subject work robot 30, such as the movement direction and movement speed of the subject work robot 30.

The CPU 36A may control the communication unit 35 to acquire state information from each of the other work robots 30, and may control the mobile unit 32 in accordance with the control content acquired by inputting the state information of the other work robots 30, together with the state information of the subject work robot 30, into the control model 16. By inputting, in addition to the state information of the subject work robot 30, the state information of the other work robots 30 into the control model 16, the route to the target location can be set with higher accuracy without colliding with the other work robots 30, as compared with a case where control is performed using only the state information of the subject work robot 30.

The CPU 36A may control the mobile unit 32 in accordance with the control content acquired by inputting only the state information of the other work robots 30 into the control model 16, without inputting the state information of the subject work robot 30.

Information acquired by the sensors 33 in each work robot 30, such as the peripheral image and map, and information generated from the information acquired by the sensors 33, represent the internal state recognized by the work robot 30. Therefore, information such as the peripheral image and map is also an example of state information representing the state of the work robot 30.

At step S40, the CPU 36A controls the ultrasonic sensors 33B to measure the distance to another object while moving the subject work robot 30, and determines whether a collision with another object is likely to occur. The CPU 36A may determine the possibility of a collision with another object using peripheral images captured by the cameras 33A or the LiDAR 33C. However, measuring the distance to another object using ultrasonic waves imposes a smaller load on the CPU 36A than measuring the distance from peripheral images. Therefore, it is preferable to determine the possibility of a collision with another object using the ultrasonic sensors 33B.

At step S50, when the CPU 36A determines that a collision with another object is likely to occur, the process flow proceeds to step S60.

At step S60, the CPU 36A modifies the route so as to avoid a collision with another object, and then the process flow proceeds to step S70.

On the other hand, when the CPU 36A determines at step S50 that a collision with another object is less likely to occur, the process flow proceeds to step S70 without performing the process step S60.

At step S70, the CPU 36A determines whether the subject work robot 30 has arrived at the target location set by the simulation. The determination of whether the target location has been reached is made based on, for example, the distance to the machine tool 4A or the storage shelf 4B that is set as the destination, and the orientation of the machine tool 4A or the storage shelf 4B included in the peripheral image.

The CPU 36A may use the map generated from the peripheral image to set, inside the factory 40, the same three-dimensional coordinates as those set in the virtual factory included in the simulation data, and may determine whether the subject work robot 30 has arrived at the target location based on the coordinate point of the subject work robot 30 in the three-dimensional coordinate system.

Even when no map is available, the CPU 36A may identify the location of the subject work robot 30 within the factory 40 based on the movement direction and movement distance of the subject work robot 30, and may determine whether the subject work robot 30 has arrived at the target location.

For example, barcodes or character strings indicating location information within the factory 40 may be displayed at respective locations on the floor surface, and the CPU 36A may determine whether the subject work robot 30 has arrived at the target location by reading the location information using the camera 33A or a barcode reader provided in the subject work robot 30.

The CPU 36A may recognize, using the cameras 33A, a positional reference point whose location is fixed, such as a column, and may determine whether the subject work robot 30 has arrived at the target location based on location information preset for the recognized positional reference point. The location information of the object serving as the positional reference point may be pre-stored, for example, in the non-volatile memory 36C.

When a network intended for real-time control, such as local 5G or local 6G, is used as the local network 3, the CPU 36A may transmit data including a transmission time from the subject work robot 30, and may determine whether the subject work robot 30 has arrived at the target location by measuring the location of the subject work robot 30 based on differences in reception times of the data at respective access points (not shown) in the local network 3.

When it is determined that the target location has not yet been reached, the process flow proceeds to step S10, and a new peripheral image is acquired at the current location of the subject work robot 30. By repeatedly performing the process steps S10 to S70 until the determination at step S70 indicates that the target location has been reached, the CPU 36A controls the mobile unit 32 to autonomously move the subject work robot 30 toward the target location, while recognizing the surrounding environment and avoiding collisions with other objects.

When it is determined in the determination process at step S70 that the target location has been reached, the process flow proceeds to step S80. In this case, the subject work robot 30 has moved to a location where the supply of parts falls within the reachable range of the arm 31.

When performing operations on parts using the arms 31, even if the CPU 36A moves the arms 31 accurately based on the control content, the arms 31 as a whole will not reach the designated positions if the mobile unit 32 has deviated from the target location. Therefore, at step S80, when controlling the arms 31, the CPU 36A fixes the mobile unit 32 to the floor surface so that the mobile unit 32 does not deviate from the target location even when the arms 31 operate.

Specifically, the CPU 36A may lock the rotating bodies 32A of the mobile unit 32 by braking, thereby fixing the subject mobile unit 32 to the floor surface. Alternatively, the CPU 36A may fix the mobile unit 32 to the floor surface by a suction pad (not shown) provided on the subject work robot 30 adhering to the floor surface. For example, the CPU 36A may control any of the arms 31 such that the suction pad attached to the distal end of the arm 31 is pressed against the floor surface to fix the subject work robot 30 to the floor surface.

The CPU 36A may fix the mobile unit 32 to the floor surface by hooking a hook (not shown) of the subject work robot 30 onto a fixture provided on the floor surface or on the machine tool 4A. Alternatively, the CPU 36A may control any of the arms 31 such that a robot hand attached to the distal end of the arm 31 grasps the fixture, thereby fixing the subject work robot 30 to the floor surface.

The CPU 36A may fix the subject work robot 30 to the floor surface by combining at least two or more of braking of the rotating bodies 32A, the suction pad, the hook, and the arm 31.

These methods of fixing the subject work robot 30 can prevent the subject work robot 30 from shifting in the horizontal direction. However, since the arms 31 perform three-dimensional operations, it is preferable to prevent the position of the subject work robot 30 from shifting not only horizontally but also vertically.

To this end, the CPU 36A may control the mobile unit 32 to extend columnar supports 32B, which are stored inside the mobile unit 32, toward the floor surface until the rotating bodies 32A are lifted off the floor surface, and may support the subject work robot 30 using the columnar supports 32B. The periphery of each rotating body 32A may be covered with an elastic material such as rubber to ensure friction with the floor surface. However, in such a case, the elastic material may cause the subject work robot 30 to vibrate in the vertical direction. However, supporting the subject work robot 30 with the columnar supports 32B prevents the elastic material covering the rotating bodies 32A from contacting the floor surface, thereby suppressing vertical vibration. The vertical direction in the present embodiment refers to a direction perpendicular to the floor surface. The term "perpendicular" does not necessarily require an intersection at exactly 90 degrees, but refers to an intersection at an angle within a predefined range that includes 90 degrees. FIG. 5 is a diagram illustrating an example in which the subject work robot 30 is fixed to the floor surface using the columnar supports 32B.

In cases where multiple work robots 30 perform tasks cooperatively, the arms 31 can be moved to their designated positions even if the subject work robot 30 deviates from the target location, as long as its relative position with respect to the other work robots 30 remains unchanged, without needing to fix the absolute position of the subject work robot 30.

Therefore, the CPU 36A may measure the distance to another work robot 30 using, for example, the ultrasonic sensors 33B, and may control the mobile unit 32 so that the measured distance does not change.

The CPU 36A acquires an image of a marker 8 using the cameras 33A and identifies another work robot 30 that is cooperating in the task based on the identification number included in the marker 8. Then, the CPU 36A may control the mobile unit 32 so that the size of the marker 8 in the captured image of the other work robot 30 does not change.

Such control of the mobile unit 32 makes it possible to prevent the relative position with respect to the other work robots 30 from changing.

After fixing the mobile unit 32 to the floor surface, at step S90 of FIG. 4, the CPU 36A controls the communication unit 35 to acquire state information of the other work robots 30.

At step S100, the CPU 36A acquires state information of the subject work robot 30. Specifically, the CPU 36A acquires a peripheral image using the cameras 33A or the LiDAR 33C, and also acquires position information of the arms 31.

At step S110, the CPU 36A inputs the state information of the other work robots 30 acquired at step S90 and the state information of the subject work robot 30 acquired at step S100 into the control model 16, and generates control content for implementing the operation that the subject work robot 30 should perform under the state represented by the acquired state information. The CPU 36A identifies the running process based on the generated control content. For example, when the control content indicates that one arm 31 grips a screw while another arm 31 rotates the screw, the CPU 36A identifies the running process as a screw-fastening step. In such a case, the CPU 36A attaches a driver for screw fastening to an attachment portion of the arm 31. As described above, the CPU 36A refers to a schedule that predefines the correspondence between each process and the tool 39 used in that process, and controls switching of the tool 39 attached to the attachment portion of the arm 31 according to the identified process. The schedule may be pre-stored, for example, in the non-volatile memory 36C.

As illustrated in FIG. 6, when multiple types of tools 39 are mounted on the mobile unit 32, the CPU 36A can select a tool 39 corresponding to the identified process from among the multiple types of tools 39 mounted on the mobile unit 32. That is, the subject work robot 30 can perform the instructed task without requiring a person to pre-arrange the necessary tools around the machine tool 4A. It is not always necessary to mount the tools 39 on the work surface 32C of the mobile unit 32, and they may instead be mounted on a side surface of the mobile unit 32.

The method for identifying the work process is not limited to this method described above, and the control model 16 may be configured to output the work process in response to the input state information. The control model 16 may also generate control content corresponding to the work process, such as attaching a driver to the attachment portion of the arm 31, based on the input state information. The CPU 36A may identify the running work process based on the position and shape of a part acquired from the peripheral image acquired at step S100, as well as the distal end position and angle of the arm 31 of another work robot 30 and the type of tool 39 mounted thereon. By identifying the work process also from the peripheral image, the accuracy of identifying the work process can be improved as compared with identifying the work process solely from the control content generated by the control model 16.

In the above description, the state information of the other work robots 30 and the state information of the subject work robot 30 are input into the control model 16, and control content for implementing the operation to be performed by the work robot 30 is generated. However, this is merely one example, and control content for the subject work robot 30 may instead be generated by inputting either the state information of the other work robots 30 or the state information of the work robot 30 itself into the control model 16.

At step S120 in FIG. 4, the CPU 36A controls the position of each arm 31 and the operation timing of the arm 31 in accordance with the control content generated at step S110, and performs the instructed task in cooperation with the other work robots 30. For example, when position control of the subject work robot 30 is performed using a marker 8, the CPU 36A acquires an image of the marker 8 of another work robot 30 using the cameras 33A, and, using appearance information such as the size, position, and shape of the marker 8, periodically determines the relative position of the other work robot 30 with respect to the subject work robot 30, thereby controlling the position of the arm 31. In this manner, the CPU 36A may perform the instructed task in cooperation with the other work robot 30. Specifically, the CPU 36A acquires the position of each arm 31 relative to the position of the marker 8 based on the position information of the arm 31, and moves the arm 31 to the target position while referring to the acquired relative distance between the marker 8 and the arm 31. The position information of the arm 31 is acquired from the position information of the subject work robot 30 and the drive amount of the arm 31.

Since each work robot 30 includes a work surface 32C on which parts can be placed, the work robot 30 can perform, on the work surface 32C, tasks that require a workbench without requiring a person to prepare a workbench in advance inside the factory 40. In this case, the CPU 36A controls the arms 31 so as to perform the instructed task on the part placed on the work surface 32C. The work surface 32C on which parts are placed does not necessarily have to be flat. For example, the work surface 32C may include uneven portions or curved portions. For example, even if the part to be processed has a spherical shape, the spherical part can be placed on the work surface 32C by placing it in a semicircular recess formed in the work surface 32C.

When placing a part on the work surface 32, the CPU 36A may not only control the arm 31 to grip the part and place it on the work surface 32, but may also control the arm 31 to grip a jig for placing the part at a designated position on the work surface 32, and place the part at the designated position by means of the jig. Furthermore, the CPU 36A may control the arm 31 to grip a fixture for fixing the part placed on the work surface 32, and fix the part to the work surface 32 using the fixture.

At step S130, the CPU 36A determines whether the instructed task has been completed. For example, the CPU 36A may determine that the instructed task has been completed when the control content generated by the control model 16 indicates completion of the task. When the instructed task has not been completed, the process flow proceeds to step S90. By repeatedly performing the process steps S90 to S130 until the determination at step S130 indicates that the instructed task has been completed, the CPU 36A inputs the sequentially acquired state information into the control model 16, and controls the arms 31 in accordance with the control content output from the control model 16, thereby performing the instructed task in cooperation with the other work robots 30.

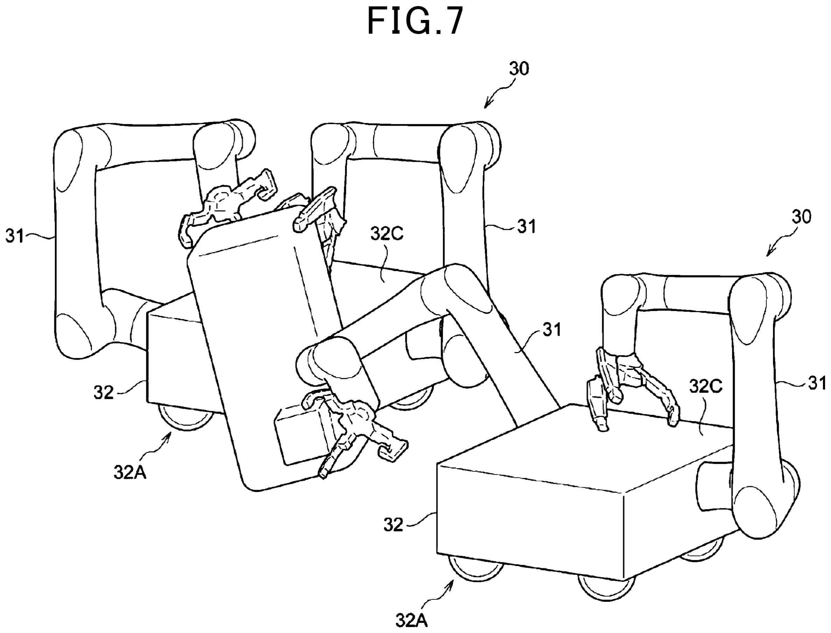

FIG. 7 is a diagram illustrating an example of a work robot 30 that assembles parts in cooperation with another work robot 30.

On the other hand, when it is determined in the determination process at step S130 that the instructed task has been completed, the process flow proceeds to step S140.

Since the task at the current location of the work robot 30 has been completed, at step S140, the CPU 36A releases the fixation of the mobile unit 32 performed at step S80, thereby allowing the work robot 30 to move.

At step S150, the CPU 36A determines whether there is a subsequent task instructed by the server 20. When there is a subsequent task, the process flow proceeds to step S10. The CPU 36A repeatedly performs the process steps S10 to S150 so that the work robot 30 moves to the next location and carries out the subsequent task. Therefore, until the determination at step S150 indicates that no subsequent task remains, the work robot 30 moves to the target location for the subsequent task and performs the task at that target location.

When it is determined in the determination process at step S150 that there is no subsequent task, the CPU 36A moves to a predefined standby location for the subject work robot 30 and terminates the control process for the work robot 30 illustrated in FIG. 4.

In this manner, each work robot 30 according to the present embodiment can autonomously produce products using the simulation data generated by the simulation device 10, even without a user having to prepare a work environment in advance, such as a workbench or tools 39, corresponding to the instructed task. Therefore, when the layout of the work space for each work robot 30 and the positions of the machine tools 4A and the storage shelves 4B are standardized among factories 40, and the work robot 30 performs the same instructed task within such a standardized work space, a single simulation suffices without needing to perform a separate simulation for each factory 40. As a result, products can be produced simultaneously in standardized factories 40 located, for example, all around the world.

Using the simulation device 10 to generate simulation data for factories 40 around the world and sending the simulation data to the servers 20 of the respective factories 40 enables users to produce the same products at multiple locations during the same period, even for products manufactured in small quantities and in many varieties. This enables quick responses to increasingly diversified product demands.

In the embodiment described above, an example was explained in which the server 20 is installed at a predefined location inside the factory 40, but the installation location of the server 20 may be moved in accordance with the movement of the work robot 30. Specifically, a mobile server robot (not shown) equipped with the functions of the server 20 on the mobile unit 32 is used. The server robot is an example of a mobile robot and does not perform tasks on parts like the work robot 30. Therefore, arms 31 are unnecessary.

When such a mobile server robot is introduced into the work system 1, it can move to a position from which good communication with each work robot 30 can be maintained as the work robots 30 move. Therefore, when a communication scheme such as Bluetooth (registered trade mark) whose communication distance is limited to line-of-sight range is used for the local network 3, the movement range of the work robot 30 becomes wider than in the case where the position of the server 20 is fixed.

The functions of the server 20 may be mounted on any one of the work robots 30. In this case, the server robot becomes unnecessary.

The types of work robots 30 in the work system 1 do not necessarily have to be the same and may differ from one another. That is, in the work system 1, general-purpose work robots 30 having different numbers of arms 31 or different types of sensors 33 may cooperate to perform the instructed tasks. In addition, work robots 30 specialized for specific tasks, such as a robot dedicated to drilling holes in parts and a robot dedicated to screw fastening, may cooperate with each other to perform the instructed tasks.

### <Coupling of Work Robots 30>

In the control process of the work robots 30 illustrated in FIG. 4, an example has been described in which each work robot 30 that has reached the target location individually cooperates to perform the instructed task. However, there are cases where it is preferable for the respective work robots 30 to be coupled to one another at the target location and to perform the instructed task in a coupled state.

Therefore, each work robot 30 includes, on the mobile unit 32, a coupling section 5 that is connectable to another work robot 30.

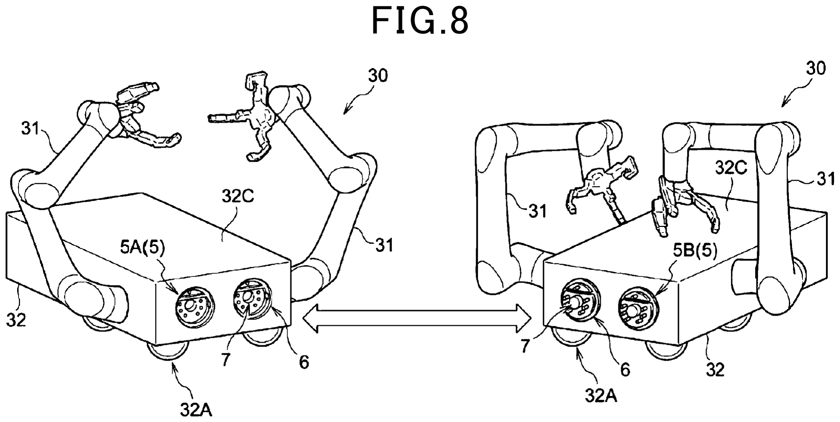

FIG. 8 is a diagram illustrating an example of the work robots 30 respectively equipped with the coupling sections 5. A first coupler 5A with a female connector and a second coupler 5B with a male connector are provided on each of the opposing side surfaces of the mobile unit 32 of the work robot 30. The first coupler 5A and the second coupler 5B have a structure that allows them to be fitted together and, include a locking mechanism 6 that mechanically locks the two couplers 5A and 5B to each other so that when one work robot 30 moves after fitting, the other work robot 30 can follow and move accordingly. The locking mechanism 6 is controlled by CPU 36A to initiate locking and unlocking. Hereinafter, the first and second couplers 5A and 5B are collectively referred to as the "coupling section 5." The coupling section 5 may also be used to exchange electric power and electrical signals.

Each coupling section 5 includes positioning portions 7 that are formed such that the coupling sections 5 of the respective work robots 30 cannot be fitted together unless they are brought into the correct relative position. The positioning portion 7 of the second coupler 5B may have a protrusion extending from the contact surface with the first coupler 5A, and the positioning portion 7 of the first coupler 5A may have a recess extending inward from the contact surface with the second coupler 5B so that the protrusion of the positioning portion 7 of the second coupler 5B fits into the recess. Therefore, the first coupler 5A and the second coupler 5B cannot be coupled unless the protrusion of the positioning portion 7 of the second coupler 5B fits into the recess of the positioning portion 7 of the first coupler 5A.

In the coupling section 5 of each work robot 30 in FIG. 8, two female connectors and two male connectors are provided. However, in each coupling section 5, the number of female connectors and the number of male connectors are not limited any specific numbers. The coupling section 5 does not necessarily have to be provided on the mobile unit 32. In a work robot 30 having a body, the coupling section 5 may be provided on the body. Further, when the coupling section 5 is provided on the mobile unit 32, the first coupler 5A and the second coupler 5B may be provided not on each of opposing side surfaces but, for example, on each of adjacent side surfaces of the mobile unit 32.

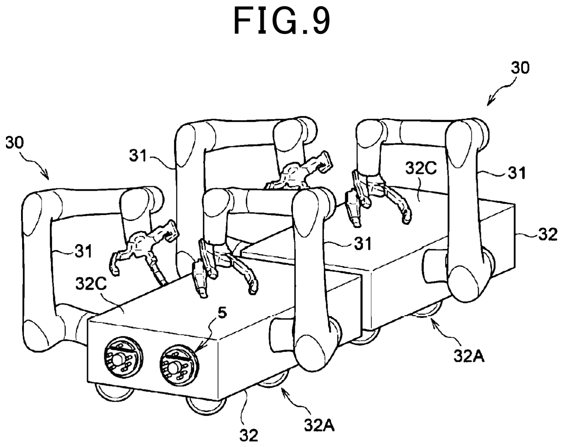

For the sake of simplicity, in FIGS. 9 to 11 described below, reference numerals for the lock mechanism 6 and the positioning portion 7 in the coupling section 5 are omitted.

FIG. 9 is a diagram illustrating an example of a state in which two work robots 30 are coupled to each other via the coupling section 5. As illustrated in FIG. 9, the CPU 36A may control the arm(s) 31 and the mobile unit 32 so as to perform the instructed task while being coupled to another work robot 30. Whether to connect to another work robot 30 is determined in accordance with the control content output from the control model 16.

With the plurality of work robots 30 coupled together, the CPU 36A of a subject work robot 30 may receive instructions from another work robot 30 coupled thereto through the coupling section 5 and, in accordance with the received instructions, control the arm(s) 31 and the mobile unit 32 of the subject work robot 30. Further, when the plurality of work robots 30 are coupled together, the CPU 36A of a subject work robot 30 may receive, through the coupling section 5, sensor measurements acquired by another work robot 30 coupled thereto and, based on the received sensor measurements, control the arm(s) 31 and the mobile unit 32 of the subject work robot 30. Still further, when the plurality of work robots 30 are coupled together, a subject work robot 30 may receive electric power from another work robot 30 coupled thereto through the coupling section 5 and charge its own battery 34.

In this case, the subject work robot 30 can receive instructions, sensor measurements from the sensors 33, and electric power not only from the adjacent work robots 30 directly coupled thereto but also from all work robots 30 coupled indirectly through those adjacent work robots 30. The subject work robot 30 designates one or more other work robots 30, among the plurality of work robots 30 coupled together, from which it will receive instructions, sensor measurements from the sensors 33, and electric power, and receives the instructions, sensor measurements, and electric power from the designated work robots 30.

In this manner, coupling a plurality of work robots 30 enables them to perform tasks that individual work robots 30 could not handle simply by gathering together without coupling.

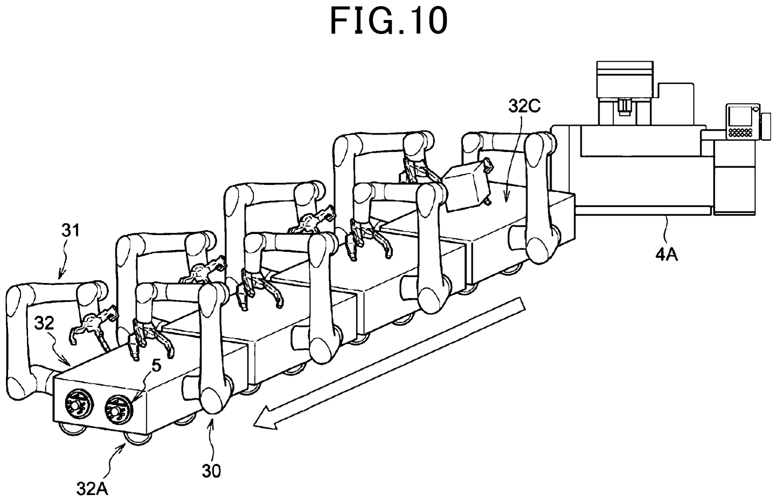

FIG. 10 is a diagram illustrating an example in which multiple work robots 30 are coupled together in front of the machine tool 4A. Each work robot 30 connects to an adjacent work robot 30 such that the work surfaces 32C of their respective mobile units 32 are continuous, thereby forming a production line extending from the machine tool 4A along the direction in which the work robots 30 are coupled.

The CPU 36A of each work robot 30 performs the instructed task on parts produced by the machine tool 4A using its arm(s) 31, while also controlling the forward of completed parts between the arm(s) 31 of adjacent work robots 30. This conveys the parts from upstream to downstream along the coupling direction of the work robots 30. The upstream direction along the coupling direction of the work robots 30 refers to the position closer to the machine tool 4A, while the downstream direction along the coupling direction of the work robots 30 refers to the position farther from the machine tool 4A. An adjacent work robot 30 located downstream with respect to a subject work robot 30 is also referred to as a "downstream work robot 30."

Since the work surfaces 32C of the respective work robots 30 are continuous, a production line is formed along the coupling direction. Therefore, the CPU 36A of each work robot 30 may place a part on the work surface 32C and perform the instructed task, and may convey the part along the coupling direction by pushing the processed part placed on the work surface 32C downstream using the arm 31.

Each of the work robots 30 coupled together may perform the instructed task while holding the part with its arm(s) 31 without placing the part on the work surface 32C, and may convey the part along the coupling direction by handing over the processed part in midair to the arm 31 of a downstream work robot 30.

Conveying parts in the coupling direction while the work robots 30 are coupled allows the parts to be transported without requiring the work robots 30 themselves to move, allowing the robots to perform their tasks while the transport proceeds. That is, by using the work robots 30, a production line can be flexibly constructed according to the conditions within the factory 40.

Among the work robots 30 coupled together, the CPU 36A of the work robot 30 located at the most downstream position, namely, the CPU 36A of the work robot 30 forming the final stage of the production line, may, after completing its task on the part, detach itself from the other work robots 30 at the coupling section 5 and control the mobile unit 32 to transport the part to a designated location. In this manner, the work robot 30 at the final stage of the production line may function as an autonomous mobile robot (AMR).

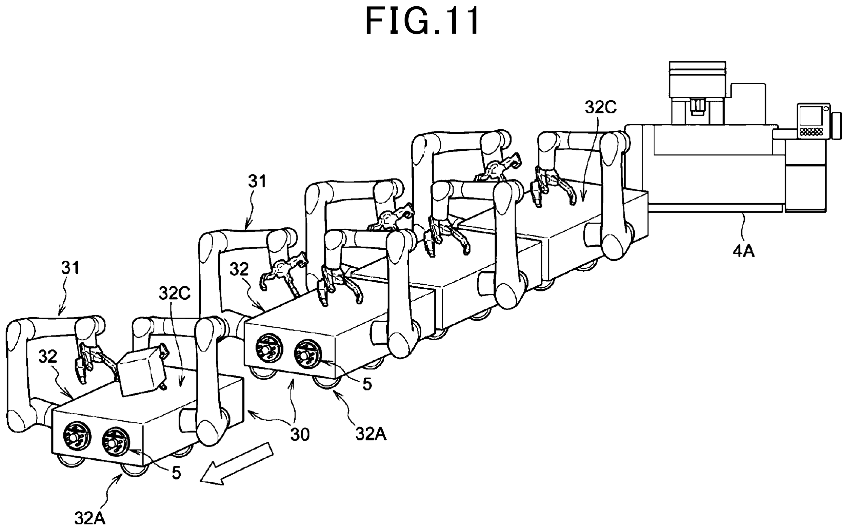

FIG. 11 is a diagram illustrating an example in which the work robot 30 located at the final stage of the production line formed by the plurality of work robots 30 functions as an autonomous mobile robot (AMR).

The work robot 30 functioning as an AMR transports the part either while holding the part in midair with the arm(s) 31, or while pressing the part with the arm(s) 31 so that the position of the part placed on the work surface 32C does not shift.

In this manner, allowing the work robot 30 located at the final stage of the production line formed of the plurality of work robots 30 to function as an AMR enables transport of the processed part to a target location while maintaining the production line. Further, changing the target location can change the delivery destination of each part. After the work robot 30 functioning as an AMR completing the transport of a part, that work robot 30 reconnects to the final stage of the production line and performs transport of the next part.

An example has been described in which each work robot 30 operates autonomously according to the control content acquired by inputting state information into the control model 16. However, the control model 16 is not an essential element for the work robot 30 to perform autonomous operations.

For example, each work robot 30 may move to a predefined location according to an instruction from the server 20, transmit the acquired state information to the server 20, and the server 20 may generate control content for the work robot 30 based on the received state information. The server 20 then transmits the generated control content to the work robot 30 that transmitted the state information. Upon receiving the control content, the work robot 30 controls the arm(s) 31 and the mobile unit 32 according to the received control content. Even while controlling the arm(s) 31 and the mobile unit 32, the work robot 30 periodically acquires state information, corrects the control content received from the server 20 using the acquired state information, and controls the arm 31 and the mobile unit 32 accordingly. For example, when the state information indicates that moving according to the control content received from the server 20 would lead to a potential collision with another work robot 30, the CPU 36A of the work robot 30 corrects the control content and selects a route with a lower risk of collision than the route instructed by the server 20. Such control is also an example of autonomous control performed by the work robot 30.

As described above, the work system 1 and the work robots 30 have been described using the above specific embodiment, but the disclosed embodiment is merely an example. The configurations of the work system 1 and the work robots 30 are not limited to the scope described in the above embodiment. Various modifications or improvements may be made to the above embodiment without departing from the gist of the present disclosure, and forms of the work system 1 and the work robots 30 incorporating such modifications or improvements are also included within the technical scope of the present disclosure.

For example, the internal processing order in the flowchart illustrated in FIG. 4 may be modified, provided that such modification does not depart from the gist of the present disclosure.

In the above embodiment, an example has been described in which the control process illustrated in FIG. 4 is implemented in software. However, the process flow equivalent to the flowchart of the control process may alternatively be performed by hardware. In this case, the processing speed can be increased as compared with the case where the control process is implemented in software.

In the above embodiment, an example has been described in which the control program 37 is stored in the non-volatile memory 36C. However, the location where the control program 37 is stored is not limited to the non-volatile memory 36C. The control program 37 may also be provided in a form recorded on a computer-readable storage medium.

For example, the control program 37 may be provided in a form recorded on an optical disk, such as a compact disc read-only memory (CD-ROM), a digital versatile disc read-only memory (DVD-ROM), or a Blu-ray Disc. Alternatively, the control program 37 may be provided in a form recorded on a portable semiconductor memory such as a universal serial bus (USB) memory or a memory card. The non-volatile memory 36C, CD-ROMs, DVD-ROMs, Blu-ray Discs, USB memories, and memory cards are examples of non-transitory storage media.

Further, the control unit 36 may download the control program 37 from the server 20 via the communication unit 35 and store the downloaded control program 37 in the non-volatile memory 36C. The server 20 may download the control program 37 from an external device connected to the wide area network 2, such as the simulation device 10.

The control device and the method thereof described in the present disclosure may be realized by a dedicated computer provided by configuring a processor and memory programmed to perform one or more functions embodied in a computer program. Alternatively, the control device and the method thereof described in the present disclosure may be realized by a dedicated computer provided by configuring a processor with one or more dedicated hardware logic circuits. Alternatively, the control device and the method thereof described in the present disclosure may be realized by one or more dedicated computers configured by a combination of a processor and memory programmed to perform one or more functions, and a processor configured with one or more hardware logic circuits. In addition, the computer program may be stored in a computer-readable, non-transitory tangible storage medium as instructions to be executed by a computer.

Appendices relating to the present embodiment are provided below.

### (Appendix 1)

A work robot (30) comprising:
at least one arm (31) configured to perform an instructed operation on an article; a mobile unit (32) configured to move on a floor surface; and
a control unit (36) configured to control the at least one arm and the mobile unit so as to autonomously perform a task on the article in cooperation with another work robot, based on state information representing at least one of a state of the other work robot and a state of the work robot itself.

### (Appendix 2)

The work robot according to appendix 1, further comprising
a communication unit (35) configured to perform data communication with a server (20) managing information relating to production of the article, wherein,
the control unit is configured to control the at least one arm and the mobile unit based on instruction information associated with designation information acquired together with the instruction information from the server via the communication unit, the instruction information indicating task content for the article, the designation information designating the work robot that is to perform the task on the article.

### (Appendix 3)

The work robot according to appendix 2, wherein
the control unit is configured to control the mobile unit to move to a location represented by location information acquired from the server via the communication unit.

### (Appendix 4)

The work robot according to appendix 3, wherein
at least one of the at least one arm or the mobile unit is provided with a sensor (33) used by the control unit for control to avoid a collision with the other work robot.

### (Appendix 5)

The work robot according to appendix 4, wherein
the location information represents a location of a supply (4A, 4B) of the article used for a product, and
the control unit is configured to control the mobile unit so as to move to the location represented by the location information within a reachable range of the at least one arm, and controls the at least one arm so as to perform the task on the article in cooperation with the other work robot.

### (Appendix 6)

The work robot according to appendix 5, wherein
the control unit is configured to control the mobile unit so that a relative position with respect to the other work robot does not change when controlling the at least one arm.

### (Appendix 7)

The work robot according to appendix 6, wherein
the control unit is configured to control the mobile unit such that a position of the mobile unit does not shift in either a horizontal direction along the floor surface or a vertical direction perpendicular to the floor surface.

### (Appendix 8)

The work robot according to any one of appendices 5 to 7, wherein
the at least one arm includes an attachment portion at a distal end thereof, the attachment portion being configured to allow attachment and detachment of a plurality of types of tools (39), and
the control unit is configured to identify a running process in the task based on the state information, and perform control to switch the tool attached to the attachment portion in accordance with the identified running process.

### (Appendix 9)

The work robot according to appendix 8, wherein
a plurality of types of tools are attached to the mobile unit, and
the control unit is configured to perform control to select, from among the plurality of types of tools attached to the mobile unit, a tool corresponding to the identified running process.

### (Appendix 10)

The work robot according to appendix 9, wherein
the control unit is configured to identify the running process in the task based on peripheral information representing surroundings acquired by the sensor.

### (Appendix 11)

The work robot according to any one of appendices 5 to 10, wherein
the mobile unit includes a work surface (32C) on which the article is to be placed, and
the control unit is configured to control the at least one arm to perform the task on the article placed on the work surface.

### (Appendix 12)

The work robot according to any one of appendices 5 to 11, wherein
the mobile unit includes a coupling section (5) configured to couple to a mobile unit of another work robot, and
the control unit is configured to control the at least one arm and the mobile unit so as to perform the task in a state where the mobile unit is coupled to the mobile unit of the other work robot.

### (Appendix 13)

The work robot according to appendix 12, wherein the control unit is configured to control the at least one arm to convey the article along a coupling direction of the mobile units while performing the task on the article.

### (Appendix 14)

The work robot according to appendix 13, wherein
in a case where the mobile unit constitutes a final stage of the mobile units coupled together, the control unit is configured to, after completing the task on the article, control the mobile unit to detach the mobile unit of the work robot from the mobile unit of the other work robot and transport the article to a designated location.

### (Appendix 15)

The work robot according to appendix 14, wherein
the mobile unit includes a work surface on which the article is to be placed, and is coupled downstream to an adjacent mobile unit such that the work surfaces of the mobile unit and the adjacent mobile unit are continuous; and
the control unit is configured to control the at least one arm to move the article, after completion of the task, to the work surface of the adjacent mobile unit.

### (Appendix 16)

The work robot according to any one of appendices 5 to 15, wherein
a ranging sensor (33A, 33B, 33C) configured to acquire a positional relationship of a surrounding object as three-dimensional data is used as the sensor.

### (Appendix 17)

The work robot according to any one of appendices 2 to 16, wherein
the control unit is configured to perform the task on the article in cooperation with the other work robot by controlling a position of the at least one arm while acquiring a relative position between the work robot and the other work robot using an image of a marker (8) provided on a surface of the other work robot.

### (Appendix 18)

The work robot according to any one of appendices 2 to 17, wherein
the communication unit is configured to receive via the server, as the instruction information, a control model (16) from an external device (10) that simulates the task on the article in a virtual space replicating a space where the work robot performs the task, the control model being configured to generate control content for controlling the at least one arm and the mobile unit to perform the task on the article based on the state information, and
the control unit is configured to control the at least one arm and the mobile unit in accordance with control content generated by the control model based on the state information to be updated.

### (Appendix 19)

A control method for a work robot (30) including at least one arm (31) configured to perform an instructed operation on an article, and a mobile unit (32) configured to move on a floor surface, the control method comprising causing a computer (38) to perform a process of controlling the at least one arm and the mobile unit to autonomously perform the task on the article in cooperation with another work robot based on state information representing at least one of a state of the other work robot and a state of the work robot itself.

### (Appendix 20)

A control program (37) for a work robot (30) including at least one arm (31) configured to perform an instructed operation on an article and a mobile unit (32) configured to move on a floor surface, the control program causing a computer (38) to perform a process of controlling the at least one arm and the mobile unit to autonomously perform the task on the article in cooperation with another work robot based on state information representing at least one of a state of the other work robot and a state of the work robot itself.

### (Appendix 21)

A non-transitory storage medium storing a control program executable a computer to perform a control process of controlling a work robot (30) including at least one arm (31) configured to perform an instructed operation on an article and a mobile unit (32) configured to move on a floor surface, the control process comprising controlling the at least one arm and the mobile unit to autonomously perform the task on the article in cooperation with another work robot based on state information representing at least one of a state of the other work robot and a state of the work robot itself.

### (Appendix 22)

A work system (1) comprising:
a plurality of work robots, each work robot (30) including at least one arm (31) configured to perform an instructed operation on an article, a mobile unit (32) configured to move on a floor surface, and a control unit (36) configured to control the at least one arm and the mobile unit so as to autonomously perform a task on the article in cooperation with another work robot based on state information representing at least one of a state of the other work robot and a state of the work robot itself; and
a server (20) including a communication unit (24) configured to perform data communication with the respective work robots and to transmit information relating to production of the article to the work robots.

### (Appendix 23)

The work system according to appendix 23, wherein
the server is configured to transmit, via the communication unit, instruction information indicating task content for the article and designation information designating a work robot to perform the task content, and
the work robot designated by the designation information controls the at least one arm and the mobile unit based on the instruction information associated with the designation information.

### (Appendix 24)

The work system according to appendices 22 or 23, wherein the server is mounted on one of the plurality of work robots and moves together with the work robot on which the server is mounted.

### (Appendix 25)

The work system according to appendix 22 or 23, wherein the server is mounted on a mobile robot that includes the mobile unit but does not include the at least one arm, and moves together with the mobile robot.

### (Appendix 26)

The work system according to any one of appendices 22 to 25, wherein
work spaces at work sites (40) for the articles, the work sites being located at different locations and each being provided with the work robots and the server, are standardized, and
the work robots at the respective work sites initiate work on the articles at the respective work sites during a same period.

## Claims

1. A work robot (30) comprising:
at least one arm (31) configured to perform an instructed operation on an article;
a mobile unit (32) configured to move on a floor surface; and
a control unit (36) configured to control the at least one arm and the mobile unit so as to autonomously perform a task on the article in cooperation with another work robot, based on state information representing at least one of a state of the other work robot and a state of the work robot itself.

2. The work robot according to claim 1, further comprising
a communication unit (35) configured to perform data communication with a server (20) managing information relating to production of the article, wherein,
the control unit is configured to control the at least one arm and the mobile unit based on instruction information associated with designation information acquired together with the instruction information from the server via the communication unit, the instruction information indicating task content for the article, the designation information designating the work robot that is to perform the task on the article.

3. The work robot according to claim 2, wherein
the control unit is configured to control the mobile unit to move to a location represented by location information acquired from the server via the communication unit.

4. The work robot according to claim 3, wherein
at least one of the at least one arm or the mobile unit is provided with a sensor (33) used by the control unit for control to avoid a collision with the other work robot.

5. The work robot according to claim 4, wherein
the location information represents a location of a supply (4A, 4B) of the article used for a product, and
the control unit is configured to control the mobile unit so as to move to the location represented by the location information within a reachable range of the at least one arm, and controls the at least one arm so as to perform the task on the article in cooperation with the other work robot.

6. The work robot according to claim 5, wherein
the control unit is configured to control the mobile unit so that a relative position with respect to the other work robot does not change when controlling the at least one arm.

7. The work robot according to claim 6, wherein
the control unit is configured to control the mobile unit such that a position of the mobile unit does not shift in either a horizontal direction along the floor surface or a vertical direction perpendicular to the floor surface.

8. The work robot according to any one of claims 5 to 7, wherein
the at least one arm includes an attachment portion at a distal end thereof, the attachment portion being configured to allow attachment and detachment of a plurality of types of tools (39), and
the control unit is configured to identify a running process in the task based on the state information, and perform control to switch the tool attached to the attachment portion in accordance with the identified running process.

9. The work robot according to claim 8, wherein
a plurality of types of tools are attached to the mobile unit, and
the control unit is configured to perform control to select, from among the plurality of types of tools attached to the mobile unit, a tool corresponding to the identified running process.

10. The work robot according to claim 9, wherein
the control unit is configured to identify the running process in the task based on peripheral information representing surroundings acquired by the sensor.

11. The work robot according to any one of claims 5 to 10, wherein
the mobile unit includes a work surface (32C) on which the article is to be placed, and
the control unit is configured to control the at least one arm to perform the task on the article placed on the work surface.

12. The work robot according to any one of claims 5 to 11, wherein
the mobile unit includes a coupling section (5) configured to couple to a mobile unit of another work robot, and
the control unit is configured to control the at least one arm and the mobile unit so as to perform the task in a state where the mobile unit is coupled to the mobile unit of the other work robot.

13. The work robot according to claim 12, wherein
the control unit is configured to control the at least one arm to convey the article along a coupling direction of the mobile units while performing the task on the article.

14. The work robot according to claim 13, wherein
in a case where the mobile unit constitutes a final stage of the mobile units coupled together, the control unit is configured to, after completing the task on the article, control the mobile unit to detach the mobile unit of the work robot from the mobile unit of the other work robot and transport the article to a designated location.

15. The work robot according to claim 14, wherein
the mobile unit includes a work surface on which the article is to be placed, and is coupled downstream to an adjacent mobile unit such that the work surfaces of the mobile unit and the adjacent mobile unit are continuous; and
the control unit is configured to control the at least one arm to move the article, after completion of the task, to the work surface of the adjacent mobile unit.

16. The work robot according to any one of claims 5 to 15, wherein
a ranging sensor (33A, 33B, 33C) configured to acquire a positional relationship of a surrounding object as three-dimensional data is used as the sensor.

17. The work robot according to any one of claims 2 to 16, wherein
the control unit is configured to perform the task on the article in cooperation with the other work robot by controlling a position of the at least one arm while acquiring a relative position between the work robot and the other work robot using an image of a marker (8) provided on a surface of the other work robot.

18. The work robot according to any one of claims 2 to 17, wherein
the communication unit is configured to receive via the server, as the instruction information, a control model (16) from an external device (10) that simulates the task on the article in a virtual space replicating a space where the work robot performs the task, the control model being configured to generate control content for controlling the at least one arm and the mobile unit to perform the task on the article based on the state information, and
the control unit is configured to control the at least one arm and the mobile unit in accordance with control content generated by the control model based on the state information to be updated.

19. A control method for a work robot (30) including at least one arm (31) configured to perform an instructed operation on an article, and a mobile unit (32) configured to move on a floor surface, the control method comprising causing a computer (38) to perform a process of controlling the at least one arm and the mobile unit to autonomously perform the task on the article in cooperation with another work robot based on state information representing at least one of a state of the other work robot and a state of the work robot itself.

20. A control program (37) for a work robot (30) including at least one arm (31) configured to perform an instructed operation on an article and a mobile unit (32) configured to move on a floor surface, the control program causing a computer (38) to perform a process of controlling the at least one arm and the mobile unit to autonomously perform the task on the article in cooperation with another work robot based on state information representing at least one of a state of the other work robot and a state of the work robot itself.

21. A work system (1) comprising:
a plurality of work robots, each work robot (30) including at least one arm (31) configured to perform an instructed operation on an article, a mobile unit (32) configured to move on a floor surface, and a control unit (36) configured to control the at least one arm and the mobile unit so as to autonomously perform a task on the article in cooperation with another work robot based on state information representing at least one of a state of the other work robot and a state of the work robot itself; and
a server (20) including a communication unit (24) configured to perform data communication with the respective work robots and to transmit information relating to production of the article to the work robots.

22. The work system according to claim 21, wherein
the server is configured to transmit, via the communication unit, instruction information indicating task content for the article and designation information designating a work robot to perform the task content, and
the work robot designated by the designation information controls the at least one arm and the mobile unit based on the instruction information associated with the designation information.

23. The work system according to claim 21 or 22, wherein the server is mounted on one of the plurality of work robots and moves together with the work robot on which the server is mounted.

24. The work system according to claim 21 or 22, wherein the server is mounted on a mobile robot that includes the mobile unit but does not include the at least one arm, and moves together with the mobile robot.

25. The work system according to any one of claims 21 to 24, wherein
work spaces at work sites (40) for the articles, the work sites being located at different locations and each being provided with the work robots and the server, are standardized, and
the work robots at the respective work sites initiate work on the articles at the respective work sites during a same period.
